# EUROPEAN PATENT APPLICATION

(11) **EP 4 282 513 A1**
(43) Date of publication of application: **29.11.2023**
(21) Application number: 22174890.8
(22) Date of filing: 23.05.2022
(51) Int. Cl.: B01D 53/94, B01J 23/00, B01J 23/40, B01J 29/08, B01J 29/18, B01J 29/40, B01J 29/70, B01J 29/80, F01N 3/20

(54) **IMPROVED CATALYSTS FOR SELECTIVE NOX REDUCTION USING HYDROGEN**

(71) Applicant: BASF CORPORATION, Florham Park, NJ 07932 (US); University of Central Florida Research Foundation, Inc., Orlando, FL 32816 (US)
(72) Inventor: Li, Yuejin, Iselin, New Jersey 08830 (US); Liu, Fudong, Orlando, Florida 32816 (US); Xie, Shaohua, Orlando, Florida 32816 (US)
(74) Representative: Altmann Stößel Dick Patentanwälte PartG mbB

(57) **Abstract**

The present disclosure is directed to a hydrogen selective catalytic reduction catalyst composition effective for reducing nitrogen oxides using hydrogen gas, wherein the hydrogen selective catalytic reduction catalyst composition comprises a first component comprising a metal component supported by an oxide support and a second component comprising a zeolite; a selective catalytic reduction articles effective for catalyzing the reduction of nitrogen oxides using hydrogen gas comprising such a hydrogen selective catalytic reduction catalyst composition; and a method for treating an exhaust stream containing nitrogen oxides using an emissions treatment system comprising such a hydrogen selective catalytic reduction catalyst composition.

## Description

The present disclosure relates to hydrogen selective catalytic reduction (H₂-SCR) catalyst compositions for the reduction of nitrogen oxides (NOₓ) from engine exhaust gas in the presence of a hydrogen gas reductant. For example, the H₂-SCR catalyst compositions comprise a first component comprising a metal component supported by an oxide support and a second component comprising a zeolite. The present disclosure is also directed to selective catalytic reduction articles, emission treatment systems for selectively reducing NOₓ compounds from an exhaust stream, and methods for treating an exhaust gas stream containing NOₓ compounds. NOx describes various chemical species of nitrogen oxides, including nitrogen monoxide (NO) and nitrogen dioxide (NO₂), among others.

By way of example, diesel engine exhaust gas is a heterogeneous mixture of gaseous, liquid, and solid emissions such as carbon monoxide (CO), unburned or partially burned hydrocarbons or oxygenates thereof (HC), NOx, and particulate matters. These emissions are subject to governmental legislation. Therefore, catalyst compositions and substrates on which the compositions are disposed are provided in diesel engine exhaust systems to convert certain or all of these exhaust components to innocuous components and reduce the amount of emissions released to the atmosphere.

Presently two commercial technologies are utilized for diesel NOx control: (1) selective catalytic reduction (SCR) with urea (or ammonia) and (2) lean NOx trap (LNT). The SCR technology is used in heavy duty and light duty applications. LNT technology is used exclusively for light duty applications. The SCR process catalytically reduces nitrogen oxides with a reductant (e.g., urea or ammonia) in the presence of excess oxygen, resulting in the formation predominantly of nitrogen and steam. Alternatively, an H₂-SCR catalyst composition, which relies on hydrogen gas rather than ammonia as the reductant, may be used for the reduction of NOx from an engine exhaust gas. Hydrogen gas is a more reactive reducing agent than ammonia at low temperatures (e.g., less than 200 °C). In the case of a diesel engine, a hydrogen gas generator may be provided upstream of the catalyst composition as a source of hydrogen gas for use as the reductant.

Diesel oxidation catalysts (DOC) are often placed in the exhaust flow path from diesel engines to treat the exhaust before it vents to the atmosphere for the conversion of gaseous HC and CO emissions. The NOₓ species in engine exhausts is predominately in the form of NO. It is well known that an NH₃ (or urea) SCR catalyst would perform more efficiently at lower temperatures, such as below 250 °C, if the NO/NO₂ molar ratio is close to about 1. To enhance the low temperature NOₓ performance on the downstream NH₃-SCR catalyst, a diesel oxidation catalyst is also used to convert a fraction of NO in the exhaust stream to NO₂. However, NO conversion efficiency becomes very low below 250 °C.

NOx emission levels are also a concern for the engine exhaust gas of a hydrogen internal combustion engine, which burns hydrogen gas. With a hydrogen gas fuel there is no CO or unburned or partially burned hydrocarbons or oxygenates thereof. However, when hydrogen is combusted with air, NOx may be formed as a result of O₂/N₂ reactions in the combustion chamber. Unburnt hydrogen gas and/or the additional hydrogen gas injected into the exhaust stream may be used as the reductant for an H₂-SCR catalyst composition.

However, there exists known issues with state-of-the-art SCR catalysts, and in particular H₂-SCR catalyst composition, such as the narrow operation temperature windows for effective NOx conversion and the undesired side effect of high nitrous oxide (N₂O) formation. H₂-SCR catalyst compositions are more effective at low temperatures, such as around 100 to 250 °C, where hydrogen gas can selectively react with NOx on catalyst surfaces. This makes an H₂-SCR catalyst composition an excellent candidate for low-temperature NOx control, particularly compared to an SCR catalyst composition that relies on ammonia as the reductant. At higher temperatures, however, hydrogen gas preferentially reacts with oxygen that exists in large quantities in the exhausts of most compression ignition engines. During H₂-SCR, the process also generates high levels of N₂O byproduct, with N₂O yield ranging from 20 to 40%. As N₂O is a powerful greenhouse gas, which is highly regulated in most of the world's automotive markets, its formation by an H₂-SCR catalyst should be reduced before the H₂-SCR catalyst composition is selected for NOx control.

One theoretical mechanism for how an H₂-SCR catalyst composition reduces nitrogen oxides (NOx) from engine exhaust gas in the presence of a hydrogen gas reductant is presented by the following elementary reaction steps.

H₂ + □ → 2H(a) (Eq. 1)

NO + □ → NO(a) (Eq. 2)

NO(a) → N(a) + O(a) (Eq. 3)

O₂ + □ → 20(a) (Eq. 4)

N(a) + N(a) → N₂ (Eq. 5)

NO(a) + N(a) → N₂O (Eq. 6)

2H(a) + O(a) → H₂O (Eq. 7)

where □ represents the active catalytic sites on metal surface, and (a) denotes atom or molecule chemically adsorbed on the surface. It is theorized that hydrogen molecules adsorb on the surface of the supported metal component and dissociate to hydrogen atoms. NO molecules can associatively and dissociatively adsorb on the surface. Combination of two adsorbed N atoms forms a N₂ molecule and that of one NO molecule and an O atom forms N₂O. The surface H atoms scavenge the surface O atoms forming water and thus keep the metal surface reduced or activated. Oxygen is not a necessary reactant for NO reduction but a competitor for hydrogen because oxygen increases the required hydrogen to keep the metal surface from being oxidized or deactivated.

With worldwide NOx regulations becoming more stringent and average engine exhaust temperatures ever decreasing, controlling NOx emissions with current SCR technology is becoming more and more challenging. Accordingly, there is a need in the art to identify more effective NOx reduction H₂-SCR technologies that may be sufficiently effective at a variety of temperature ranges without producing high yields of N₂O gas in order to meet future stringent regulations.

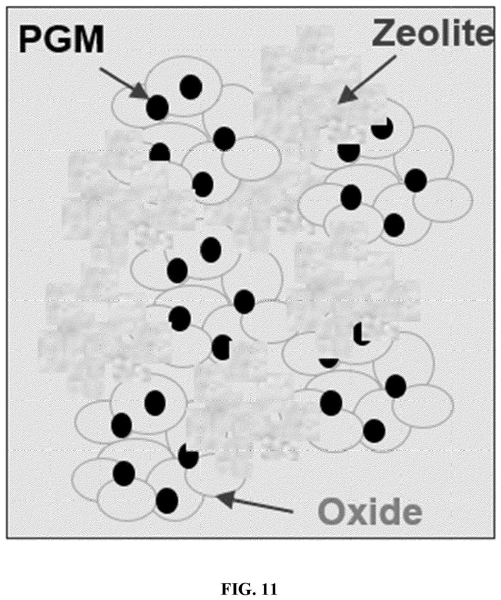

The present disclosure provides advanced H₂-SCR catalyst compositions that significantly increase NOx conversion and decrease N₂O formation relative to standard reference H₂-SCR catalyst compositions, especially at low temperatures. In particular, it was discovered that by adding a zeolite component to a PGM component on an oxide support, one could significantly increase the NOx conversion and decrease N₂O formation with an H₂-SCR catalyst composition. This simultaneous improvement in activity and selectivity appears to be related to a heretofore unrecognized synergistic effect between the two components. FIG. 11 is a schematic representation of an embodiment of an H₂-SCR catalyst composition of the present disclosure with a first component comprising a metal component (PGM, black dot) on an oxide support (white ovoid) combined with a separate second component comprising a zeolite (yellow squares).

The improved performance was achieved with a variety of compositions, including but not limited to those with a metal component selected from platinum (Pt) and/or palladium (Pd) on a (mixed) oxide support along with a zeolite with a zeolite structure, such as ^{∗}BEA, FER, MOR, CHA, FAU, and MFI.

These and other features, aspects, and advantages of the disclosure will be apparent from a reading of the following detailed description together with the accompanying drawings, which are briefly described below. Other aspect and advantages of the disclosed subject matter will become apparent from the following.

### BRIEF DESCRIPTION OF THE DRAWINGS

To provide an understanding of embodiments of the disclosure, reference is made to the appended drawings. The drawing is exemplary only and should not be construed as limiting the disclosure. The disclosure described herein is illustrated by way of example and not by way of limitation in the appended drawings. For simplicity and clarity of illustration, features illustrated in the drawings are not necessarily drawn to scale. For example, the dimensions of some features may be exaggerated relative to other features for clarity.
FIG. 1A shows the comparison of NOx conversion rates of H₂-SCR catalyst composition embodiments of the present disclosure to a standard Pt-SiO₂/TiO₂ reference composition.
FIG. 1B shows the comparison of N₂O formation rates of the catalyst compositions of FIG. 1A.
FIG. 2A shows the comparison of NOx conversion rates of H₂-SCR catalyst compositions with PGM (Pt) supported on either an oxide support or on a zeolite support.
FIG. 2B shows the comparison of N2O formation rates of the catalyst compositions of FIG. 2A.
FIG. 3A shows the comparison NOx conversion rates of H₂-SCR catalyst composition embodiments of the present disclosure with different oxide/ Y-zeolite mixing ratios to a standard Pt-Si/TiO₂ reference composition.
FIG. 3B shows the comparison of N₂O formation rates of the catalyst compositions of FIG. 3A.
FIG. 4A shows the NOx conversion rates of H₂-SCR catalyst compositions with different PGM (Pt) concentrations on an oxide or zeolite support.
FIG. 4B shows the comparison of N₂O formation rates of the catalyst compositions of FIG. 4A.
FIG. 5A compares the NOx conversion rates of H₂-SCR catalyst composition embodiments of the present disclosure with different CHA zeolites to a standard Pt-SiO₂/TiO₂ reference composition.
FIG. 5B shows the comparison of N₂O formation rates of the catalyst compositions of FIG. 5A.
FIG. 6A shows the NOx conversion rates of H₂-SCR catalyst compositions wherein the PGM is Pd or a mixture of Pt and Pd.
FIG. 6B shows the comparison of N₂O formation rates of the catalyst compositions of FIG. 6A.
FIG. 7A shows the NOx conversion of H₂-SCR catalyst composition embodiments of the present disclosure with zeolites of varying iron loadings to a standard Pt-SiO₂/TiO₂ reference composition.
FIG. 7B shows the comparison of N₂O formation rates of the catalyst compositions of FIG. 7A.
FIG. 8A compares the NOx conversion rates of H₂-SCR catalyst composition embodiments of the present disclosure to a standard Pt/Al₂O₃ reference composition.
FIG. 8B shows the comparison of N₂O formation rates of the catalyst compositions of FIG. 8A.
FIG. 9A shows the comparison NOx conversion rates of H₂-SCR catalyst composition embodiments of the present disclosure with different oxide/ Beta-zeolite mixing ratios to a Pt-SiO₂/WO₃/ZrO₂ reference composition.
FIG. 9B shows the comparison of N₂O formation rates of the catalyst compositions of FIG. 9A.
FIG. 10A compares the NOx conversion rates of H₂-SCR catalyst compositions with an oxide support of SiO₂.
FIG. 10B shows the comparison of N₂O formation rates of the catalyst compositions of FIG. 10A.
Fig. 11 shows a schematic representation of an H₂-SCR catalyst composition embodiment of the present disclosure.

As used herein, "a" or "an" entity refers to one or more of that entity, e.g., "a support" refers to one or more supports or at least one support unless stated otherwise. As such, the terms "a" (or "an"), "one or more", and "at least one" are used interchangeably herein.

As used herein, the term "about" means approximately, in the region of, roughly, or around. When the term "about" is used in conjunction with a numerical range, it modifies that range by extending the boundaries above and below the numerical values set forth. In general, the term "about" is used herein to modify a numerical value above and below the stated value by a variance of 5%. All numeric values are modified by the term "about whether or not explicitly indicated. Numeric values modified by the term "about" include the specific identified value. For example, "about 100" means a number ranging from 95 to 105, including 95, 100, and 105. Recitation of ranges of values herein are merely intended to serve as a shorthand method of referring individually to each separate value falling within the range, unless otherwise indicated herein, and each separate value is incorporated into the specification as if it were individually recited herein.

As used herein, "catalyst" or "catalyst material" or catalytic material" refers to a material that promotes a reaction.

As used herein, the term "catalytic article" refers to an element that is used to promote a desired reaction. For example, a catalytic article may comprise a washcoat containing a catalyst species, e.g., a catalyst composition, on a substrate, e.g., a honeycomb substrate.

As used herein, the term "metal component" refers to any platinum group metal (PGM) except for osmium (i.e., Ru, Rh, Ir, Pd, or Pt). Reference to PGM allows for the presence of the metal in any valence state. For example, the PGM may be in metallic form, with zero valence, or the PGM may be in another form, such as an oxide form or a nitrate form. The terms "ruthenium (Ru)," "rhodium (Rh)," "iridium (Ir)," "palladium (Pd)," "platinum (Pt)," and the like refer to the respective PGM compound, complex, or the like which, upon calcination or use of the catalyst, decomposes or otherwise converts to a catalytically active form, usually the metal or the metal oxide.

As used herein. the terms "nitrogen oxides" or "NOx" refers to oxides of nitrogen. Exemplary nitrogen oxides include oxide compounds, such as NO and NO₂.

As used herein, "support" of a "catalyst" or "catalyst material" or "catalytic material" refers to material that receives the "catalyst" or "catalyst material" or "catalytic material" through precipitation, association, dispersion, impregnation, or other suitable means. The term "oxide support" refers to an oxide compound comprising a transition metal or lanthanide (e.g., aluminum (Al), vanadium (V), tungsten (W), titanium (Ti), copper (Cu), iron (Fe), nickel (Ni ), manganese (Mn), cerium (Ce), lanthanum (La), praseodymium (Pr), zinc (Zn), niobium (Nb), zirconium (Zr), molybdenum (Mo), tin (Sn), silicon (Si), calcium (Ca), yttrium (Y), or combinations thereof that is catalytically active for reduction of NOx, or promotes another catalytic component to be more active for reduction of NOx. An oxide support particularly includes oxides of copper, iron, manganese, tin, aluminum, zirconium, silicon, titanium, tungsten, molybdenum, nickel, and combinations thereof.

As used herein, the term "promoted" refers to a metal component ("promoter metal") that is intentionally added to, e.g., a zeolite, typically through ion exchange, as opposed to impurities inherent in the zeolite. In some embodiments, promoter metals that can be used to prepare promoted zeolites of the disclosed catalyst compositions include, but are not limited to, iron (Fe) and copper (Cu). In some embodiments, both copper and iron may be present as promoter metals.

As used herein, the term "substrate" refers to the monolithic material onto which the catalyst composition is placed, typically in the form of a washcoat containing a plurality of supports having catalytic species thereon

As used herein, the term "zeolite" refers to a specific example of a molecular sieve, including silicon and aluminum atoms. Zeolites are crystalline materials having rather uniform pore sizes which, depending upon the type of zeolite and the type and amount of cations included in the zeolite lattice, range from about 3 to 10 Angstroms (Å) in diameter.

The term "acidic zeolite" refers to a protonated zeolite (H-zeolite) or a zeolite which can be converted to an H-zeolite, such as NH₄-zeolite. The term "H-Zeolite" refers to a zeolite having more than 90% exchangeable sites as protons (H+).

### H₂-SCR Catalyst Compositions

In the present disclosure, a hydrogen selective catalytic reduction (H₂-SCR) catalyst composition is provided that is effective to catalyze the reduction of NOx from engine exhaust gas in the presence of a hydrogen gas reductant. The H₂-SCR catalyst comprises a first component comprising a metal component supported by an oxide support and a second component comprising a zeolite.

In some embodiments, the metal component is a PGM selected from platinum, palladium, rhodium, iridium, ruthenium, and combinations thereof. For example, the metal component may be selected from platinum, palladium, rhodium, iridium, and combinations thereof. In some embodiments the metal component is either platinum or palladium or combination of platinum and palladium.

In some embodiments, two or more PGMs may be combined on the same oxide support. For example, both platinum and palladium may be present on the same oxide support. In other embodiments, the composition further comprises a third component comprising a second PGM supported on a separate second oxide support. For example, platinum and palladium may be present on different oxide supports; one from the first component and one from the third component. Whether present on the same or different oxide supports, the platinum to palladium weight ratio may range from about 1:10 to about 10:1, from about 1:5 to about 10:1, from about 1:1 to about 10:1, from about 2:1 to about 10:1, or from about 3:1 to about 5:1.

Each supported PGM can be prepared separately or multiple PGMs can be impregnated in the same process on the same support.

The metal component may be dispersed on the oxide support by, for example, dispersing a soluble precursor (e.g., palladium nitrate) thereon. Alternatively, the metal component is provided in particulate form in the composition, such as fine particles as small as 1 to 15 nanometers in diameter or smaller.

The amount of metal component deposited on the oxide support may vary. For example, an exemplary PGM loading for the H₂-SCR catalyst composition may be about 1 to about 200 g/ft³, such as about 10 to about 50 g/ft³. The first component of the H₂-SCR catalyst composition may comprise from about 0.1%, about 0.2%, about 0.3%, about 0.4%, about 0.5%, about 0.6%, about 0.7%, about 0.8%, about 0.9%, about 1.0%, about 1.1%, about 1.2%, about 1.3%, about 1.4%, about 1.5%, about 1.6%, about 1.7%, about 1.8%, about 1.9%, about 2.0%, about 3.0%, about 4.0%, or about 5.0%, to about 6.0%, about 7.0%, about 8.0%, about 9.0%, about 10.0%, about 11.0%, about 12.0%, about 13.0%, about 14.0%, about 15.0%, about 16.0%, about 17.0%, about 18.0%, about 19.0% or about 20.0% of a PGM by weight with respect to weight of the oxide support. In some embodiments, the metal component is present in an amount of about 0.1% by weight to about 10.0% by weight with respect to weight of the oxide support.

In some embodiments, the oxide support is an oxide of Al, V, W, Ti, Cu, Fe, Ni, Mn, Ce, La, Pr, Zn, Nb, Zr, Mo, Sn, Si, Ca, Y, or a combination thereof. Possible oxide supports include Al₂O₃, SiO₂, SnO₂, CeO₂, ZrO₂, MgO, La₂O₃, CaO, Y₂O₃, TiO₂, SiO₂, FeOₓ, and MnOₓ. In some embodiments, the oxide support is selected from TiO₂, ZrO₂, Al₂O₃, and SiO₂.Oxides of Co, Cr, Ag, and Au are not appropriate oxide supports for the compositions of the present disclosure.

In other embodiments, the oxide support is a mixed oxide support. Possible mixed oxide supports include TiO₂/ZrO₂, CeO₂/MgO, WO₃/ZrO₂, WO₃/Al₂O₃, WO₃/TiO₂, WO₃/SiO₂, Al₂O₃/La₂O₃, TiO₂/Al₂O₃, V₂O₅/TiO₂-Al₂O₃, Nb₂O₅/SiO₂, ZnO/Al₂O₃, SiO₂/TiO₂, SiO₂/Al₂O₃, Mn/TiO₂/Al₂O₃, and perovskites. In further embodiments, the oxide support is selected from TiO₂/ZrO₂, WO₃/ZrO₂, WO₃/Al₂O₃, WO₃/TiO₂,WO₃/SiO₂, SiO₂/TiO₂ and SiO₂/Al₂O₃.

In some embodiments, the metal component of the first component and/or the second PGM of the third component is supported by an oxide/zeolite support. The present disclosure is not directed to H₂-SCR catalyst compositions with a first component comprising a zeolite support and no oxide support.

In some embodiments, the first and/or third components of the H₂-SCR catalyst composition may further comprise an acidic oxide modifier (sometimes referred to as a promoter) on the oxide support. When an acidic oxide modifier is present, the mass ratio of modifier to PGM may range from about 1:1 to about 1:30. For example, the mass ratio of modifier to PGM may range from about 1:3 to about 1:10. The lower end of the range can be 1:1, 1:2, 1:3, 1:4, 1:5, 1:6, 1:7, 1:8, 1:9. The upper end of the range can be 1:10, 1:12, 1:14, 1:16, 1:18, 1:20, 1:22, 1:24, 1:26, 1:28, and 1:30. In certain embodiments, the acidic oxide modifier on the oxide support can be selected from SiO₂, TiO₂, Nb₂O₅, MoO₃, and combinations thereof. By way of examples, SiO₂ may be present as an acidic oxide modifier of a TiO₂ or Al₂O₃ support or SiO₂ and WO₃ may be present as acidic oxide modifiers of a ZrO₂ support. For example, an acidic modifier may be added as colloidal nanoparticles to the support and, thus, not part of the support. When an oxide is part of a mixed oxide support, a "/" is used to indicate the combination, such as Pt/SiO₂/TiO₂. When an oxide is used as an acidic modifier, this is shown with a "-", such as Pt-SiO₂/TiO₂.

The H₂-SCR catalyst composition comprises a second component comprising a zeolite. In some embodiments, the second component consists essentially of or consists of zeolite. The structure type of the zeolite may vary. In certain embodiments, the zeolite has a structure type selected from AEI, AFT, AFX, AVL, ^{∗}BEA, CHA, DDR, EAB, EEI, ERI, FAU, FER, IFY, IRN, KFI, LEV, LTA, LIN, MOR, MER, MFI, MWF, NPT, PAU, RHO, RTE, RTH, SAS, SAT, SAV, SFW, TSC, UFI, and combinations thereof.

In some embodiments, the zeolite is an acidic zeolite. For example, the zeolite may have a structure type chosen from MOR (H-mordenite), ^{∗}BEA (H-beta), FER (H-ferrierite), CHA (H-chabazite), FAU (H-Y), MFI (H-ZSM-5), and combinations thereof.

Zeolites do not have a practical activity for an H₂-SCR catalyst composition. However, when a zeolite, particularly an acidic zeolite, is included as a second component for an H₂-SCR catalyst composition, a synergistic effect was unexpectedly observed. The presence of the zeolite as a second component increased the NOx conversion characteristics and reduced the amount of N₂O formed during the catalytic reaction with respect to the first component alone. This synergistic effect was not observed when the first component comprised a zeolite.

In other embodiments, the second component of the H₂-SCR catalyst composition is a metal-promoted zeolite. The metal promoting the zeolite is generally a base metal (e.g., a transition metal or lanthanide). In some embodiments, the metal promoting the zeolite is one or more of Cu, Co, Ni, La, Mn, Fe, V, Ag, Ce, Nd, Mo, Hf, Y, or W. In certain embodiments, the metal promoting the zeolite is one or more of Cu and Fe. In certain embodiments, the metal promoting the zeolite is Fe. Reference to "metal" in this context allows for the presence of the metal in any valence state. For example, the metal promoting the zeolite may be in metallic form, with zero valence, or the metal may be in an oxide form. Generally, the metal promoting the zeolite will be present in an oxide form.

Zeolites generally have a silica to alumina (Si/Al) molar ratio of 2 or greater. In some embodiments, the zeolite of the H₂-SCR catalyst composition has a Si/Al molar ratio in the range of 2:1 to 100:1. In other embodiments, the zeolite has a Si/Al molar ratio in the range of 10:1 to 15:1. Within a Si/Al molar ratio of 10:1 to 15:1, it has been observed that an H₂-SCR catalyst composition of the present disclosure with a FAU or FER structure type provided better activity at lower temperatures and broader reactions temperature windows than other structure types. It is theorized that the increased NOx conversion is related to the Bronsted acidity of zeolite. The lower the Si/Al molar ratio in a zeolite, the higher acid density a zeolite would provide. However, a lower Si/Al molar ratio would typically lead to a less hydrothermally stable zeolite.

In some embodiments, the catalyst composition has a first component to second component ratio ranging from 95:5 to 10:90.

### Preparation of H₂-SCR Catalyst Compositions

According to the present disclosure, a H₂-SCR catalyst composition is generally prepared by providing a first component comprising a metal component supported by an oxide support and providing a second component comprising a zeolite. The first and second components are initially separate components. If present, the third component may be separate or previously combined with the first component.

The components may be combined to form the H₂-SCR catalyst composition by various methods. In one embodiment, the components may be physically mixed, such as dry powder mixing. In another embodiment, the components may be combined by dispersing the components in solvent, such as water, to form a slurry. In yet another embodiment, the components may be co-milled, such as ball or wet milling.

Generally, the catalyst composition is prepared so as to be coated on a substrate. Typical additional components of the catalyst composition include, but are not limited to, additives to control, e.g., pH and viscosity of the catalyst composition to be coated. Additional components can include associative thickeners and/or surfactants (including anionic, cationic, non-ionic or amphoteric surfactants). A typical pH range for the catalyst composition to be coated is about 3 to about 6. Addition of acidic or basic species to the catalyst composition to be coated can be carried out to adjust the pH accordingly. For example, in some embodiments, the pH is adjusted downward by the addition of aqueous acetic acid or nitric acid or upward by the addition of monoethanolamine.

The present H₂-SCR catalyst compositions may also be prepared using a binder, for example, a ZrO₂ binder derived from a suitable precursor such as zirconyl acetate or any other suitable zirconium precursor such as zirconyl nitrate. Zirconyl acetate binder provides a coating that remains homogenous and intact after thermal aging, for example, when the catalyst is exposed to high temperatures of at least about 600 °C to about 800 °C, and higher. Other potentially suitable binders include, but are not limited to, alumina and silica. Alumina binders include aluminum oxides, aluminum hydroxides, and aluminum oxyhydroxides. Aluminum salts and colloidal forms of alumina may also be used. Silica binders include various forms of SiO₂, including silicates and colloidal silica. Binder compositions may include any combination of zirconia, alumina, and silica.

After the components have been combined, the catalyst composition to be coated can be milled to reduced particle size and to enhance mixing of the particles and formation of a homogenous material. The milling can be accomplished in a ball mill, continuous mill, or other similar equipment, and the solids content of the slurry may be, e.g., about 20-60 wt.%, more particularly about 20-40 wt.%. In one embodiment, the post-milling slurry is characterized by a D90 particle size of about 1 to about 40 microns, preferably 2 to about 20 microns, more preferably about 4 to about 15 microns.

To simulate real world use scenarios, the catalyst composition may be hydrothermally aged, such as at 650 °C for 50 hours with 10% steam in air prior to testing for NOx conversion and N₂O formation rates.

### Catalytic Articles

In another aspect of the present disclosure, a selective catalytic reduction (SCR) article effective to catalyze the reduction of nitrogen oxides (NOx) from an exhaust gas in the presence of a hydrogen gas reductant comprises a substrate having an H₂-SCR catalyst composition of the present disclosure disposed thereon.

### Substrates

In one or more embodiments, the present H₂-SCR catalyst compositions are disposed on a substrate to form a catalytic article. Catalytic articles comprising the substrates are generally employed as part of an exhaust gas treatment system (e.g., catalyst articles including, but not limited to, articles including the SCR compositions disclosed herein). Useful substrates are 3-dimensional, having a length and a diameter and a volume similar to a cylinder. The shape does not necessarily have to conform to a cylinder. The length is an axial length defined by an inlet end and an outlet end.

According to one or more embodiments, the substrate for the disclosed composition(s) may be constructed of any material typically used for preparing automotive catalysts and will typically comprise a metal or ceramic honeycomb structure. The substrate typically provides a plurality of wall surfaces upon which the washcoat composition is applied and adhered, thereby acting as a substrate for the catalyst composition.

Ceramic substrates may be made of any suitable refractory material, e.g., cordierite, cordierite-α-alumina, aluminum titanate, silicon titanate, silicon carbide, silicon nitride, zircon mullite, spodumene, alumina-silica-magnesia, zircon silicate, sillimanite, a magnesium silicate, zircon, petalite, α-alumina, an aluminosilicate and the like.

Substrates may also be metallic, comprising one or more metals or metal alloys. A metallic substrate may include any metallic substrate, such as those with openings or "punch-outs" in the channel walls. The metallic substrates may be employed in various shapes such as pellets, compressed metallic fibers, corrugated sheet or monolithic foam. Specific examples of metallic substrates include heat-resistant, base-metal alloys, especially those in which iron is a substantial or major component. Such alloys may contain one or more of nickel, chromium, and aluminum, and the total of these metals may advantageously comprise at least about 15 wt. % (weight percent) of the alloy, for instance, about 10 to about 25 wt. % chromium, about 1 to about 8 wt. % of aluminum, and from 0 to about 20 wt. % of nickel, in each case based on the weight of the substrate. Examples of metallic substrates include those having straight channels; those having protruding blades along the axial channels to disrupt gas flow and to open communication of gas flow between channels; and those having blades and also holes to enhance gas transport between channels allowing for radial gas transport throughout the monolith.

Any suitable substrate for the catalytic articles disclosed herein may be employed, such as a monolithic substrate of the type having fine, parallel gas flow passages extending there through from an inlet or an outlet face of the substrate such that passages are open to fluid flow there through ("flow-through substrate"). Another suitable substrate is of the type have a plurality of fine, substantially parallel gas flow passages extending along the longitudinal axis of the substrate where, typically, each passage is blocked at one end of the substrate body, with alternate passages blocked at opposite end-faces ("wall-flow filter").

In some embodiments, the catalyst substrate comprises a honeycomb substrate in the form of a wall-flow filter or a flow-through substrate. In some embodiments, the substrate is a wall-flow filter. In some embodiments, the substrate is a flow-through substrate. Flow-through and wall-flow substrates are also taught, for example, in International Application Publication No. WO 2016/070090 and U.S. Patent Application Publication No. 2012/0178380 A1, which are incorporated herein by reference in their entirety.

### Substrate Coating Process

To produce an SCR article of the present disclosure, a substrate is coated with an H₂-SCR catalyst composition as disclosed herein.

The present H₂-SCR catalyst compositions may typically be applied in the form of one or more washcoats of the H₂-SCR catalyst composition. A washcoat is formed by preparing a slurry containing a specified solids content (e.g., about 10 to about 60% by weight) of catalyst composition in a liquid vehicle, which is then applied to a substrate using any washcoat technique known in the art and dried and calcined to provide a coating layer. If multiple coatings are applied, the substrate is dried and/or calcined after each washcoat is applied and/or after the number of desired multiple washcoats are applied. In one embodiment, the H₂-SCR catalyst composition is applied to the substrate as a single washcoat.

After calcining, the catalyst loading obtained by the above described washcoat technique can be determined through calculation of the difference in coated and uncoated weights of the substrate. As will be apparent to those of skill in the art, the catalyst loading can be modified by altering the slurry rheology. In addition, the coating/drying/calcining process to generate a washcoat layer (coating layer) can be repeated as needed to build the coating to the desired loading level or thickness, meaning more than one washcoat may be applied.

The present catalytic coating may comprise one or more coating layers, where at least one layer comprises the present H₂-SCR catalyst composition or one or more components of the catalyst composition. The catalytic coating may comprise one or more thin, adherent coating layers disposed on and in adherence to least a portion of a substrate. The entire coating comprises the individual "coating layers".

In some embodiments, the present catalytic articles may include the use of one or more catalyst layers and combinations of one or more catalyst layers. Catalytic materials may be present on the inlet side of the substrate wall alone, the outlet side alone, both the inlet and outlet sides, or the wall itself may consist all, or in part, of the catalytic material. The catalytic coating may be on the substrate wall surfaces and/or in the pores of the substrate walls, that is "in" and/or "on" the substrate walls. Thus, the phrase "a washcoat disposed on the substrate" means on any surface, for example on a wall surface and/or on a pore surface.

The washcoat(s) can be applied such that different coating layers may be in direct contact with the substrate. Alternatively, one or more "undercoats" may be present, so that at least a portion of a catalytic coating layer or coating layers are not in direct contact with the substrate (but rather, are in contact with the undercoat). One or more "overcoats" may also be present, so that at least a portion of the coating layer or layers are not directly exposed to a gaseous stream or atmosphere (but rather, are in contact with the overcoat).

Alternatively, the present H₂-SCR catalyst composition may be in a top coating layer over a bottom coating layer. The H₂-SCR catalyst composition may be present in a top and a bottom layer. Any one layer may extend the entire axial length of the substrate, for instance a bottom layer may extend the entire axial length of the substrate and a top layer may also extend the entire axial length of the substrate over the bottom layer. Each of the top and bottom layers may extend from either the inlet or outlet end.

For example, both bottom and top coating layers may extend from the same substrate end where the top layer partially or completely overlays the bottom layer and where the bottom layer extends a partial or full length of the substrate and where the top layer extends a partial or full length of the substrate. Alternatively, a top layer may overlay a portion of a bottom layer. For example, a bottom layer may extend the entire length of the substrate and the top layer may extend about 10%, about 20%, about 30%, about 40%, about 50%, about 60%, about 70%, about 80% or about 90% of the substrate length, from either the inlet or outlet end.

Alternatively, a bottom layer may extend about 10%, about 15%, about 25%, about 30%, about 40%, about 45%, about 50%, about 55%, about 60%, about 65%, about 70%, about 75%, about 80%, about 85% or about 95% of the substrate length from either the inlet end or outlet end and a top layer may extend about 10%, about 15%, about 25%, about 30%, about 40%, about 45%, about 50%, about 55%, about 60%, about 65%, about 70%, about 75%, about 80%, about 85% or about 95% of the substrate length from either the inlet end of outlet end, wherein at least a portion of the top layer overlays the bottom layer. This "overlay" zone may for example extend from about 5% to about 80% of the substrate length, for example about 5%, about 10%, about 20%, about 30%, about 40%, about 50%, about 60% or about 70% of the substrate length.

In some embodiments, the H₂-SCR catalyst composition as disclosed herein, disposed on the substrate as disclosed herein, comprises a first washcoat comprising the H₂-SCR catalyst composition, wherein the first washcoat is disposed on at least a portion of the length of the catalyst substrate; and a second washcoat with the same or a different composition is disposed on at least a portion of the length of the catalyst substrate.

In some embodiments, the first washcoat is disposed directly on the catalyst substrate, and the second washcoat is disposed on at least a portion of the first washcoat. In some embodiments, the second washcoat is disposed directly on the catalyst substrate, and the first washcoat is disposed on at least a portion of the second washcoat. In some embodiments, the first washcoat is disposed directly on the catalyst substrate from the inlet end to a length of from about 10% to about 50% of the overall length; and the second washcoat is disposed on at least a portion of the first washcoat. In some embodiments, the second washcoat is disposed directly on the catalyst substrate from the inlet end to a length of from about 50% to about 100% of the overall length; and the first washcoat is disposed on at least a portion of the second washcoat. In some embodiments, the first washcoat is disposed directly on the catalyst substrate from the inlet end to a length of from about 20% to about 40% of the overall length, and the second washcoat extends from the inlet end to the outlet end. In some embodiments, the first washcoat is disposed directly on the catalyst substrate from the outlet end to a length of from about 10% to about 50% of the overall length, and the second washcoat is disposed on at least a portion of the first washcoat. In some embodiments, the first washcoat is disposed directly on the catalyst substrate from the outlet end to a length from about 20 to about 40% of the overall length, and the second washcoat extends from the inlet end to the outlet end. In some embodiments, the second washcoat is disposed directly on the catalyst substrate from the outlet end to a length of from about 50% to about 100% of the overall length, and the first washcoat is disposed on at least a portion of the second washcoat. In some embodiments, the first washcoat is disposed directly on the catalyst substrate covering 100% of the overall length, and the second washcoat is disposed on the first washcoat covering 100% of the overall length. In some embodiments, the second washcoat is disposed directly on the catalyst substrate covering 100% of the overall length, and the first washcoat is disposed on the second washcoat covering 100% of the overall length.

The catalytic coating may advantageously be "zoned," comprising zoned catalytic layers, that is, where the catalytic coating contains varying compositions across the axial length of the substrate. This may also be described as "laterally zoned". For example, a layer may extend from the inlet end towards the outlet end extending about 10%, about 20%, about 30%, about 40%, about 50%, about 60%, about 70%, about 80%, or about 90% of the substrate length. Another layer may extend from the outlet end towards the inlet end extending about 10%, about 20%, about 30%, about 40%, about 50%, about 60%, about 70%, about 80%, or about 90% of the substrate length. Different coating layers may be adjacent to each other and not overlay each other. Alternatively, different layers may overlay a portion of each other, providing a third "middle" zone. The middle zone may, for example, extend from about 5% to about 80% of the substrate length, for example about 5%, about 10%, about 20%, about 30%, about 40%, about 50%, about 60% or about 70% of the substrate length.

Zones of the present disclosure are defined by the relationship of coating layers. With respect to different coating layers, there are several possible zoning configurations. For example, there may be an upstream zone and a downstream zone, there may be an upstream zone, a middle zone and a downstream zone, there may four different zones, etc. Where two layers are adjacent and do not overlap, there are upstream and downstream zones. Where two layers overlap to a certain degree, there are upstream, downstream and middle zones. Where for example, a coating layer extends the entire length of the substrate and a different coating layer extends from the outlet end a certain length and overlays a portion of the first coating layer, there are upstream and downstream zones.

For instance, the article may comprise an upstream zone comprising the first washcoat layer comprising the H₂-SCR catalyst composition; and a downstream zone comprising a second washcoat layer with the same or a different composition.

Alternatively, an upstream zone may comprise the second washcoat layer and a downstream zone may comprise the first washcoat layer.

In some embodiments, the first washcoat is disposed on the catalyst substrate from the inlet end to a length of from about 10% to about 50% of the overall length; and the second washcoat is disposed on the catalyst substrate from the outlet end to a length of from about 50% to about 90% of the overall length. In some embodiments, the first washcoat is disposed on the catalyst substrate from the outlet end to a length of from about 10% to about 50% of the overall length; and wherein the second washcoat is disposed on the catalyst substrate from the inlet end to a length of from about 50% to about 90% of the overall length.

In some embodiments, a catalytic article may further comprise a diesel oxidation catalyst (DOC) composition, which maybe in a zone downstream from an H₂-SCR catalyst composition, in a bottom layer with an upper layer comprises an H₂-SCR catalyst article, or where the DOC composition intermingled with an H₂-SCR catalyst composition. In other embodiments, a catalytic article may further comprise a low temperature NOx adsorbent (LTNA). The LTNA functionality may be part of a DOC composition, part of a H₂-SCR catalyst composition, part of both the DOC composition and the H₂-SCR catalyst composition, separate from the DOC composition and from the H₂-SCR catalyst composition, or combinations thereof.

### Exhaust Gas Treatment Systems

In another aspect of the present disclosure, an emissions treatment system for selectively reducing NOx compounds from an exhaust gas stream comprises the SCR article with the H₂-SCR catalyst composition disclosed herein. Another embodiment may feature a system which comprises an H₂-SCR catalyst composition and an NH₃-SCR catalyst composition.

In further embodiments, the emission treatment system may further comprise a hydrogen gas generator or a hydrogen gas injector. The hydrogen gas generator or hydrogen may be in fluid communication and upstream of the H₂-SCR catalytic article. Such a system may also comprise a pump, a reservoir, etc. The hydrogen generator could vary and may be selected from the group consisting of on-board hydrogen, hydrogen produced from alcohol reforming, hydrogen produced from ammonia decomposition, hydrogen produced from hydrocarbon reforming, and mixtures thereof.

In some embodiments, the emission treatment system may further comprise a lean NOx trap (LNT) catalytic article comprising a substrate and a LNT catalyst composition, the LNT catalytic article in fluid communication and downstream of the H₂-SCR catalytic article.

The relative placement of the various components present within the emission treatment system can vary. In the present exhaust gas treatment systems and methods, the exhaust gas stream is received into the SCR article(s) or treatment system by entering the upstream end and exiting the downstream end. The inlet end of a substrate of an article is synonymous with the "upstream" end or "front" end. The outlet end is synonymous with the "downstream" end or "rear" end. The treatment system is, in general, downstream of and in fluid communication with an internal combustion engine, such as a diesel engine or a hydrogen internal combustion engine.

### Method of Treating Engine Exhaust

Another aspect of the present invention is directed to a method of treating the exhaust gas stream containing NOx compounds. In some embodiments, the method includes treating the exhaust gas stream during a cold phase, or cold start phase, that is where the exhaust gas temperatures are about 200 °C or lower, about 175 °C or lower, about 150 °C or lower, about 125 °C or lower, or about 100 °C or lower. In some embodiments, the method includes treating the exhaust gas stream, where the exhaust temperature is about 100 °C to about 250 °C.

The method can include placing the H₂-SCR catalyst article according to the present disclosure downstream from an engine and flowing the engine exhaust gas stream over the catalyst. In one or more embodiments, the method further comprising placing additional catalyst components downstream from the engine as noted above.

The present H₂-SCR catalyst compositions, articles, systems, and methods are suitable for treatment of exhaust gas streams of diesel engines and hydrogen internal combustion engines. The H₂-SCR catalyst compositions are also suitable for treatment of NOx emissions from stationary industrial processes, from indoor air, or for catalysis in chemical reaction processes.

It will be readily apparent to one of ordinary skill in the relevant arts that suitable modifications and adaptations to the compositions, methods, and applications described herein can be made without departing from the scope of any embodiments or aspects thereof. The compositions and methods provided are exemplary and are not intended to limit the scope of the claimed embodiments. All of the various embodiments, aspects, and options disclosed herein can be combined in all variations. The scope of the compositions, methods, and applications described herein include all actual or potential combinations of embodiments, aspects, options, examples, and preferences herein. All patents and publications cited herein are incorporated by reference herein for the specific teachings thereof as noted, unless other specific statements of incorporation are specifically provided

Before describing exemplary embodiments of the present disclosure, it is to be understood that the disclosure is not limited to the details of construction or process steps set forth in the following examples and is capable of other embodiments and of being practiced or being carried out in various ways.

### Embodiments:

Without limitation, some embodiments of the disclosure include:
Embodiment 1. A hydrogen selective catalytic reduction (H₂-SCR) catalyst composition effective for the reduction of nitrogen oxides (NOₓ) from engine exhaust gas in the presence of a hydrogen gas reductant, the H₂-SCR catalyst composition comprising: (i) a first component comprising a platinum group metal (PGM) supported by an oxide support; and (ii) a second component comprising a zeolite.
Embodiment 2. The H₂-SCR catalyst composition according to embodiment 1, wherein the metal component is the PGM selected from platinum (Pt), palladium (Pd), rhodium (Rh), iridium (Ir), and combinations thereof. An exemplary PGM loading may be about 1 to about 200 g/ft³ when coated on a substrate, such as about 10 to about 50 g/ft³. Additionally, the composition may comprise from about 0.1%, about 0.2%, about 0.3%, about 0.4%, about 0.5%, about 0.6%, about 0.7%, about 0.8%, about 0.9%, about 1.0%, about 1.1%, about 1.2%, about 1.3%, about 1.4%, about 1.5%, about 1.6%, about 1.7%, about 1.8%, about 1.9%, about 2.0%, about 3.0%, about 4.0%, or about 5.0%, to about 6.0%, about 7.0%, about 8.0%, about 9.0%, about 10.0%, about 11.0%, about 12.0%, about 13.0%, about 14.0%, about 15.0%, about 16.0%, about 17.0%, about 18.0%, about 19.0% or about 20.0% of PGM by weight with respect to weight of the oxide support.
Embodiment 3. The H₂-SCR catalyst composition according to embodiment 2, wherein the PGM is Pt.
Embodiment 4. The H₂-SCR catalyst composition according to embodiment 2, wherein the PGM is Pd.
Embodiment 5. The H₂-SCR catalyst composition according to any one of embodiments 1-4, further comprising a second PGM supported on the oxide support.
Embodiment 6. The H₂-SCR catalyst composition according to embodiment 5, wherein the second PGM is Pd. For example, when the metal component is Pt, the Pt to Pd weight ratio may range from about 1:10 to about 10:1, from about 1:5 to about 10:1, from about 1:1 to about 10:1, from about 2:1 to about 10:1, or from about 3:1 to about 5:1.
Embodiment 7. The H₂-SCR catalyst composition according to any one of embodiments 1-6, further comprising a third component comprising a second PGM supported on a second oxide support.
Embodiment 8. The H₂-SCR catalyst composition according to embodiment 7, wherein the metal component is Pt and the second PGM is Pd. For example, the Pt to Pd weight ratio may range from about 1:10 to about 10:1, from about 1:5 to about 10:1, from about 1:1 to about 10:1, from about 2:1 to about 10:1, or from about 3:1 to about 5:1.
Embodiment 9. The H₂-SCR catalyst composition according to any one of embodiments 1-8, wherein the metal component is present in an amount of about 0.1% to about 10% by weight with respect to the weight of oxide support.
Embodiment 10. The H₂-SCR catalyst composition according to any one of embodiments 1-9, wherein the oxide support is an oxide of aluminum (Al), vanadium (V), tungsten (W), titanium (Ti), copper (Cu), iron (Fe), nickel (Ni), manganese (Mn), cerium (Ce), lanthanum (La), praseodymium (Pr), zinc (Zn), niobium (Nb), zirconium (Zr), molybdenum (Mo), tin (Sn), silicon (Si), calcium (Ca), yttrium (Y), or combinations thereof. For example the oxide support is an oxide of copper, iron, manganese, tin, aluminum, zirconium, silicon, titanium, tungsten, molybdenum, nickel, or combinations thereof.
Embodiment 11. The H₂-SCR catalyst composition according to embodiment 10, wherein the oxide support is selected from Al₂O₃, SiO₂, SnO₂, CeO₂, ZrO₂, MgO, La₂O₃, CaO, Y₂O₃, TiO₂, SiO₂, FeOₓ, and MnOₓ, such as from TiO₂, ZrO₂, Al₂O₃, and SiO₂.
Embodiment 12. The H₂-SCR catalyst composition according to any one of embodiments 1-10, wherein the oxide support is a mixed oxide support.
Embodiment 13. The H₂-SCR catalyst composition according to embodiment 12, wherein the mixed oxide is selected from TiO₂/ZrO₂, CeO₂/MgO, WO₃/ZrO₂, WO₃/Al₂O₃, WO₃/TiO₂, WO₃/SiO₂, Al₂O₃/La₂O₃, TiO₂/Al₂O₃, V₂O₅/TiO₂-Al₂O₃, Nb₂O₅/SiO₂, ZnO/Al₂O₃, SiO₂/TiO₂, SiO₂/Al₂O₃, Mn/TiO₂/Al₂O₃, and perovskites. For example, the mixed oxide is selected from TiO₂/ZrO₂, WO₃/Al₂O₃, WO₃/TiO₂,WO₃/SiO₂, WO₃/ZrO₂, and SiO₂/TiO₂, and SiO₂/Al₂O₃.
Embodiment 14. The H₂-SCR catalyst composition according to any one of embodiments 1-13, further comprising an acidic oxide modifier on the oxide support.
Embodiment 15. The H₂-SCR catalyst composition according to embodiment 14 wherein the acidic oxide modifier is selected from SiO₂, WO₃, Nb₂O₅, MoO₃, and TiO₂.
Embodiment 16. The H₂-SCR catalyst composition according to any one of embodiment 1-15 wherein the mass ratio of metal component to acidic oxide modifier ranges from about 1:1 to about 1:30.
Embodiment 17. The H₂-SCR catalyst composition according to any one of embodiments 1-16, wherein the mass ratio of metal component to acidic oxide modifier ranges from about 1:3 to about 1:10.
Embodiment 18. The H₂-SCR catalyst composition according to any one of embodiments 1-17, wherein zeolite is an acidic zeolite.
Embodiment 19. The H₂-SCR catalyst composition according to any one of embodiments 1-18, wherein the second component consists essentially of an acidic zeolite.
Embodiment 20. The H₂-SCR catalyst compositions according to any one of embodiments 1-19, wherein the zeolite is a metal promoted zeolite. For example, the metal promoting the zeolite is one or more of Cu, Co, Ni, La, Mn, Fe, V, Ag, Ce, Nd, Mo, Hf, Y, and W.
Embodiment 21. The H₂-SCR catalyst composition according to embodiment 20, wherein the metal promoted zeolite is selected from Fe/Zeolite, Cu/Zeolite, and Fe/Cu/zeolite.
Embodiment 22. The H₂-SCR catalyst composition according to any one of embodiments 1-21, wherein the zeolite comprises more than one structure type.
Embodiment 23. The H₂-SCR catalyst composition according to any one of embodiments 1-22, wherein the zeolite has a structure type selected from AEI, AFT, AFX, AVL, ^{∗}BEA, CHA, DDR, EAB, EEI, ERI, FAU, FER, IFY, IRN, KFI, LEV, LTA, LIN, MOR, MER, MFI, MWF, NPT, PAU, RHO, RTE, RTH, SAS, SAT, SAV, SFW, TSC, UFI, and combinations thereof.
Embodiment 24. The H₂-SCR catalyst composition according to embodiment 23, wherein the zeolite is chosen from FAU, ^{∗}BEA, MOR, MFI, CHA, FER, and combinations thereof.
Embodiment 25. The catalyst composition according to any one of embodiments 1-24, wherein the zeolite has a Si/Al molar ratio in the range of 2:1 to 100:1, such as in the range from 10:1 to 15:1.
Embodiment 26. The catalyst composition according to any one of embodiments 1-25, wherein the first component and second component are added in a mass ratio ranging from 95:5 to 10:90.
Embodiment 27. The H₂-SCR catalyst composition according to any one of embodiments 1-26, wherein the first component and second component are combined into a composite by: (1) physical mixing the first and second components; (2) dispersing the first and second components in water to form a slurry; (3) co-milling the first and second components; or (4) a combination thereof.
Embodiment 28. A selective catalytic reduction (SCR) article effective to catalyze the reduction of nitrogen oxides (NOₓ) from exhaust gas in the presence of a hydrogen gas reductant, the SCR article comprising a substrate having H₂-SCR catalyst composition according to any one of embodiments 1-27 disposed thereon.
Embodiment 29. An emissions treatment system for selectively reducing NOₓ compounds from an exhaust gas stream, the system comprising the SCR article according to embodiment 28.
Embodiment 30. The emission treatment system of embodiment 29, further comprising a hydrogen gas generator or a hydrogen gas injector.
Embodiment 31. A method for treating an exhaust gas stream containing NOx compounds, the method comprising passing the exhaust gas stream through the emissions treatment system of any one of embodiments 29-30.
Embodiment 32. The method for treating an exhaust gas stream of embodiment 31, wherein the exhaust gas stream is an exhaust stream of a hydrogen internal combustion engine or a hydrogen-treated exhaust stream of a diesel engine.

Claims or descriptions that include "or" or "and/or" between at least one member of a group are considered satisfied if one, more than one, or all the group members are present in, employed in, or otherwise relevant to a given product or process unless indicated to the contrary or otherwise evident from the context. The disclosure includes embodiments in which exactly one member of the group is present in, employed in, or otherwise relevant to a given product or process. The disclosure includes embodiments in which more than one, or all the group members are present in, employed in, or otherwise relevant to a given product or process.

Furthermore, the disclosure encompasses all variations, combinations, and permutations in which at least one limitation, element, clause, and descriptive term from at least one of the listed claims is introduced into another claim. For example, any embodiment/claim that is dependent on another embodiment/claim can be modified to include at least one limitation found in any other embodiment/claim that is dependent on the same base embodiment/claim. Where elements are presented as lists, such as, e.g., in Markush group format, each subgroup of the elements is also disclosed, and any element(s) can be removed from the group. It should be understood that, in general, where the disclosure, or aspects of the disclosure, is/are referred to as comprising particular elements and/or features, embodiments of the disclosure or aspects of the disclosure consist, or consist essentially of, such elements and/or features. For purposes of simplicity, those embodiments have not been specifically set forth in haec verba herein. Where ranges are given (such as, e.g., from [X] to [Y]), endpoints (such as, e.g., [X] and [Y] in the phrase "from [X] to [Y]") are included unless otherwise indicated. Furthermore, unless otherwise indicated or otherwise evident from the context and understanding of one of ordinary skill in the art, values that are expressed as ranges can assume any specific value or subrange within the stated ranges in different embodiments of the disclosure, to the tenth of the unit of the lower limit of the range, unless the context clearly dictates otherwise.

Those of ordinary skill in the art will recognize or be able to ascertain using no more than routine experimentation, many equivalents to the specific embodiments of the disclosure described herein. Such equivalents are intended to be encompassed by the following nonlimiting examples.

### EXAMPLES

The following examples are intended to be illustrative and are not meant in any way to limit the scope of the disclosure.

Unless stated otherwise, evaluation of the catalytic activity of the samples listed below was carried out on a continuous flow fixed-bed quartz tubular reactor with an internal diameter of 4 mm. A catalyst sample of 26 mg (40-60 mesh) was diluted with 0.25 g of inert SiC powder (40-60 mesh) to minimize any hot spots. For a zeolite-containing catalyst (PGM/oxide + zeolite), the sample contained the same amount of metal as that of a PGM/oxide sample. The feed gas mixture comprised of 500 ppm NO, 1% H₂, 10% O₂, 5% CO₂ and 5% H₂O and balance Ar with a flow rate of 200 cm³/min, which resulting in a weight hourly space velocity (WHSV) of 461,500 mLg⁻¹h⁻¹. Reactants and products were analyzed online using a MultiGas 2030 CEMCert FTIR spectrometer coupled with a Mass Spectrometer (MS, Hiden Analytical). *m*/*z* ratios of 32 and 2 were used for O₂ and H₂ detection, respectively. NOₓ conversion is defined as (*C*_{*NOx-*inlet} - *C*_{*NOx*-outlet}) / *C*_{*NOx-*inlet} × 100%, where *C*_{*NOx*-inlet} and *C*_{*NOx-*outlet} are the NOₓ (NO + NO₂) concentrations at the catalyst inlet and outlet, respectively. N₂O yield is defined as *C_{N2O-outlet}* × 2 / *C*_{*NOx-*inlet} × 100%, where *C*_{*N2O*-outlet} is the outlet N₂O concentration.

### EXAMPLE 1: Catalyst Preparation and Evaluation of 1Pt-8Si/TiO₂ + zeolite

Table 1 lists **two-component** catalysts of the present disclosure and a one-component reference catalyst. Sample 1 is a reference catalyst and was prepared by impregnating a mixed solution of colloidal Pt nanoparticles and colloidal SiO₂ nanoparticles (acidic oxide modifier) on a TiO₂ support using the incipient wetness technique. The particle sizes of the colloidal Pt are within 1 nm and 4 nm. The average particle size of the colloidal SiO₂ is about 12 nm. After impregnation, the resulting material was calcined in air at 550 °C for 2 hours. The Pt and SiO₂ concentrations are 1% by weight and 8% by weight, respectively, with respect to the weight of the oxide support. Samples 2 to 7 were prepared by mechanically mixing the reference catalyst with a zeolite component at 1:1 weight ratio. The zeolite in Samples 2 to 7 is a H-form of beta (Si/Al=12.5:1), ferrierite (Si/Al=10:1), chabazite (Si/Al=14.5:1), Y (Si/Al=15:1), ZSM-5 (Si/Al=15:1) and mordenite (Si/Al=10:1), respectively. All samples, including the reference sample, were hydrothermally aged at 650 °C for 50 hours with 10% steam in air. All samples in Table 1 contain the same amount of Pt.

**Table 1**

| Sample Number | Sample Name | PGM/Oxide | Zeolite | Mixing ratio |
|---|---|---|---|---|
| 1 | 1Pt-8SiO₂/TiO₂ (Ref) | 1% Pt-8% SiO₂/TiO₂ | N/A | NA |
| 2 | 1Pt-8SiO₂/TiO₂ + BEA | 1% Pt-8% SiO₂/TiO₂ | H-beta | 1:1 |
| 3 | 1Pt-8SiO₂/TiO₂ + FER | 1% Pt-8% SiO₂/TiO₂ | H-ferrierite | 1:1 |
| 4 | 1Pt-8SiO₂/TiO₂ + CHA | 1% Pt-8% SiO₂/TiO₂ | H-chabazite | 1:1 |
| 5 | 1Pt-8SiO₂/TiO₂ + Y | 1% Pt-8% SiO₂/TiO₂ | H-Y (FAU) | 1:1 |
| 6 | 1Pt-8SiO₂/TiO₂ + ZSM5 | 1% Pt-8% SiO₂/TiO₂ | H-ZSM-5 (MFI) | 1:1 |
| 7 | 1Pt-8SiO₂/TiO₂ + MOR | 1% Pt-8% SiO₂/TiO₂ | H-mordenite | 1:1 |

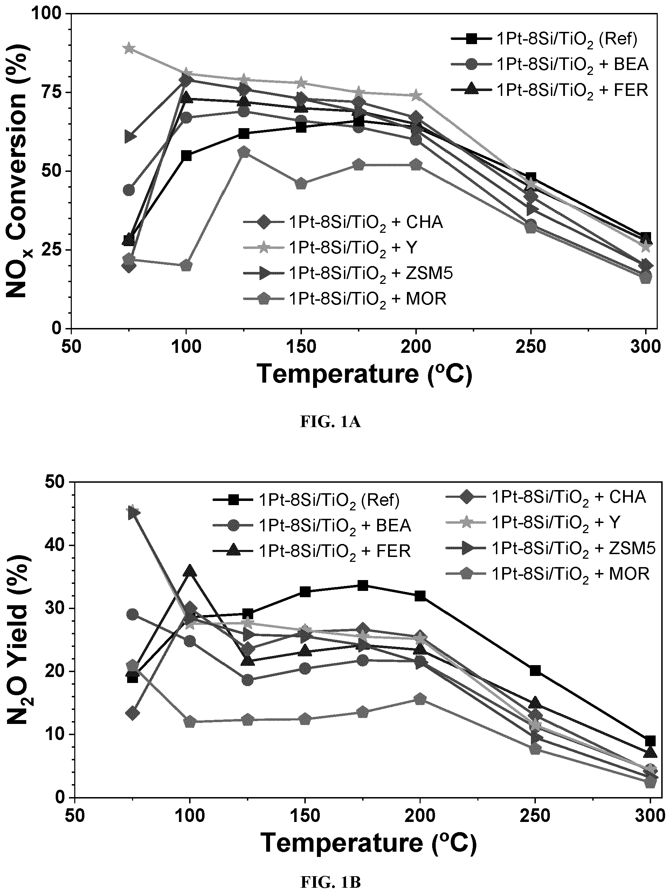

As shown by FIGs. 1A and 1B, which compare the NOₓ conversion and N₂O formation rates, respectively, of the samples listed in Table 1, Samples 2-7 show higher NOₓ conversion and lower N₂Oformation at most of the tested temperatures than Reference Sample 1 (reference sample). Sample 5 (Zeolite Y) is most active in promoting NOₓ conversion, while Sample 2 (Zeolite ^{∗}Beta-containing catalyst) has the lowest N₂O formation.

### EXAMPLE 2: Catalyst Preparation and Evaluation of 1Pt-8SiO₂/TiO₂ + Y

Table 2 lists samples prepared by two different types of component combinations and their corresponding references. Samples 1 and 5 were prepared as described in Example 1.

Sample 8 is a reference catalyst and was prepared by impregnating the colloidal Pt nanoparticle on zeolite H-Y (Si/Al=15:1) using the incipient wetness technique. 8% SiO₂/TiO₂ was prepared by impregnating the colloidal SiO₂ nanoparticles (acidic oxide modifier) on TiO₂ support. Comparative Sample 9 was prepared by mechanically mixing 1Pt/Y and 8% SiO₂/TiO₂ at 1:1 weight ratio. All samples were hydrothermally aged at 650 °C for 50 hours with 10% steam in air.

**Table 2**

| Sample Number | Sample Name | Oxide | Zeolite | Mixing ratio |
|---|---|---|---|---|
| 1 | 1Pt-8SiO₂/TiO₂ (Ref) | 1% Pt-8% SiO₂/TiO₂ | N/A | NA |
| 5 | 1Pt-8SiO₂/TiO₂ + Y | 1% Pt-8% SiO₂/TiO₂ | H-Y | 1:1 |
| 8 | 1Pt/Y (Ref) | NA | 1% Pt/H-Y | NA |
| 9 | 1Pt/Y + 8SiO₂/TiO₂ | 8% SiO₂/TiO₂ | 1% Pt/H-Y | 1:1 |

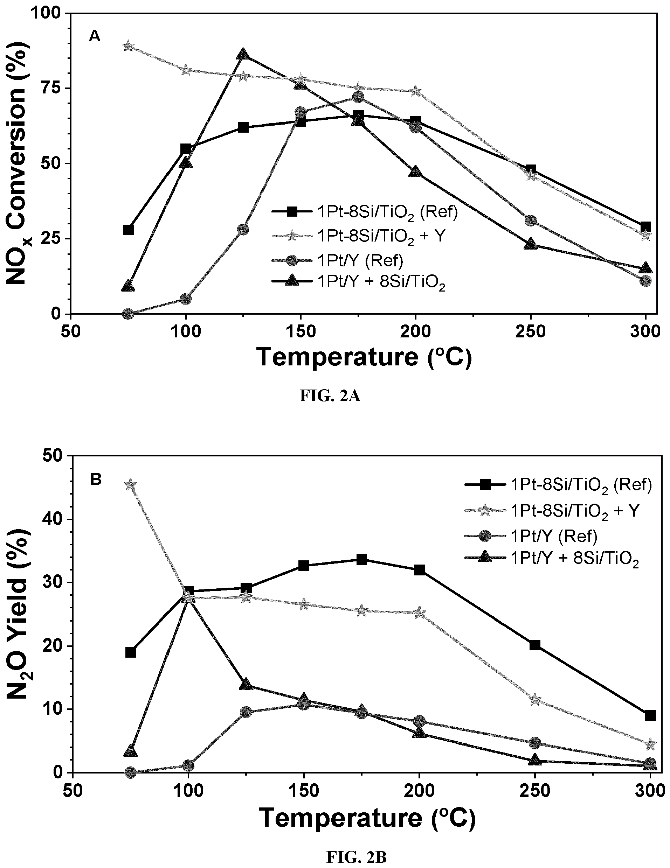

As shown in FIGs. 2A and B, which compare the NOₓ conversion and N₂O formation rates, respectively, of the samples listed in Table 2, Reference Sample 8 (directly supporting Pt on zeolite H-Y) results in lower NOx conversion compared to Reference Sample 1 (1Pt-8SiO₂/TiO₂ reference). Furthermore, Comparative Sample 9 (Pt/Y + 8SiO₂/TiO₂) improves the NOx conversion but increases N₂O formation at low temperatures. Overall, the highest NOx conversion across the entire temperature window was observed on Sample 5. While Sample 5 and Comparative Sample 9 comprise Pt, SiO₂, TiO₂, and H-Y zeolite, substantially different NOx conversion and N₂O formation rates were observed.

### Example 3: Catalyst Preparation and Evaluation of 1Pt-8SiO₂/TiO₂ + Y with different oxide to zeolite ratios

Table 3 lists Reference Sample 1 and catalysts comprising 1Pt-8SiO₂/TiO₂ + Y with different ratios of 1Pt-8SiO₂/TiO₂ to Y. The catalysts were prepared with the same method as in Example 1 and aged under the same conditions. All samples were hydrothermally aged at 650 °C for 50 hours with 10% steam in air. All samples in Table 3 contains the same amount of Pt.

**Table 3**

| Sample Number | Sample Name | PGM/Oxide | Zeolite | Mixing ratio |
|---|---|---|---|---|
| 1 | IPt-8 SiO₂/TiO₂ (Ref) | 1% Pt-8% SiO₂/TiO₂ | N/A | NA |
| 10 | IPt-8 SiO₂/TiO₂ + Y_2:1 | 1% Pt-8% SiO₂/TiO₂ | H-Y | 2:1 |
| 5 | IPt-8 SiO₂/TiO₂ + Y_1:1 | 1% Pt-8% SiO₂/TiO₂ | H-Y | 1:1 |
| 11 | IPt-8 SiO₂/TiO₂ + Y_1:2 | 1% Pt-8% SiO₂/TiO₂ | H-Y | 1:2 |

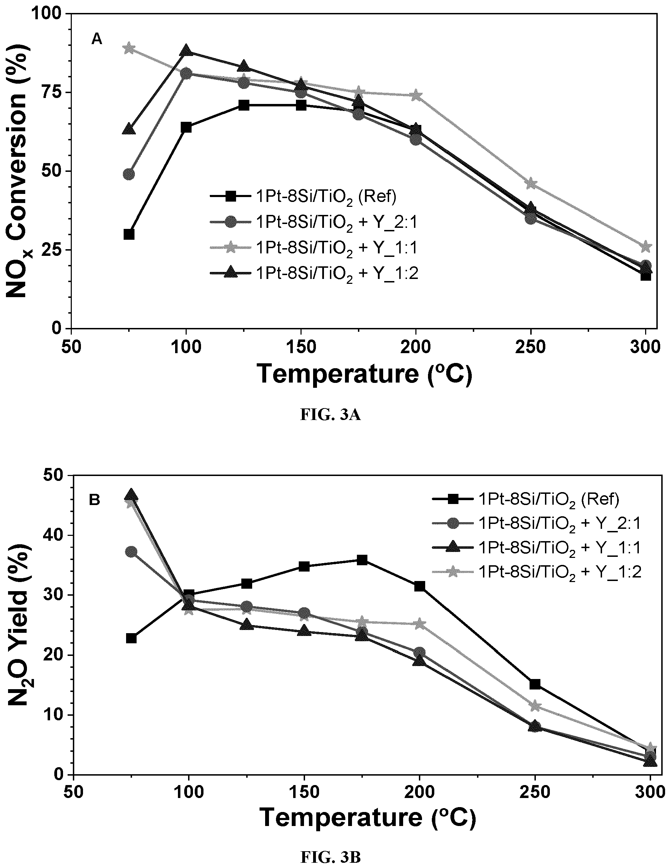

As shown in FIGs. 3A and 3B, which compares the NOₓ conversion and N₂O formation rates, respectively of the samples listed in Table 3, all zeolite-containing samples show higher NOₓ conversion and lower N₂O formation relative to the Pt/oxide reference regardless of the mixing ratio.

### Example 4: Catalyst Preparation and Evaluation of 0.5Pt-4SiO₂/TiO₂ and 0.5Pt/Y

Table 4 lists of four catalysts samples. Sample 5 and Comparative Sample 9 were prepared as described in Examples 1 and 2, respectively. Reference Sample 12 was prepared with the same method as Reference Sample 1 as described in Example 1 but with 50% of Pt and SiO₂ (acidic oxide modifier) concentrations. Similarly, Reference Sample 13 was prepared with the same method as Reference Sample 8 as described in Example 2 but with 50% of Pt concentration. All four samples in Table 4 contain the same amount of Pt in the final catalyst, i.e., 0.5 % by weight with respect to the weight of the catalyst. All samples were hydrothermally aged at 650 °C for 50 hours with 10% steam in air.

**Table 4**

| Sample Number | Sample Name | Oxide | Zeolite | Mixing ratio |
|---|---|---|---|---|
| 12 | 0.5Pt-4SiO₂/TiO₂ (Ref) | 0.5% Pt-4% SiO₂/TiO₂ | NA | NA |
| 13 | 0.5Pt/Y (Ref) | NA | 0.5% Pt/H-Y | NA |
| 5 | 1Pt-8SiO₂/TiO₂ + Y | 1% Pt-8% SiO₂/TiO₂ | H-Y | 1:1 |
| 9 | 1Pt/Y + 8SiO₂/TiO₂ | 8% SiO₂/TiO₂ | 1% Pt/H-Y | 1:1 |

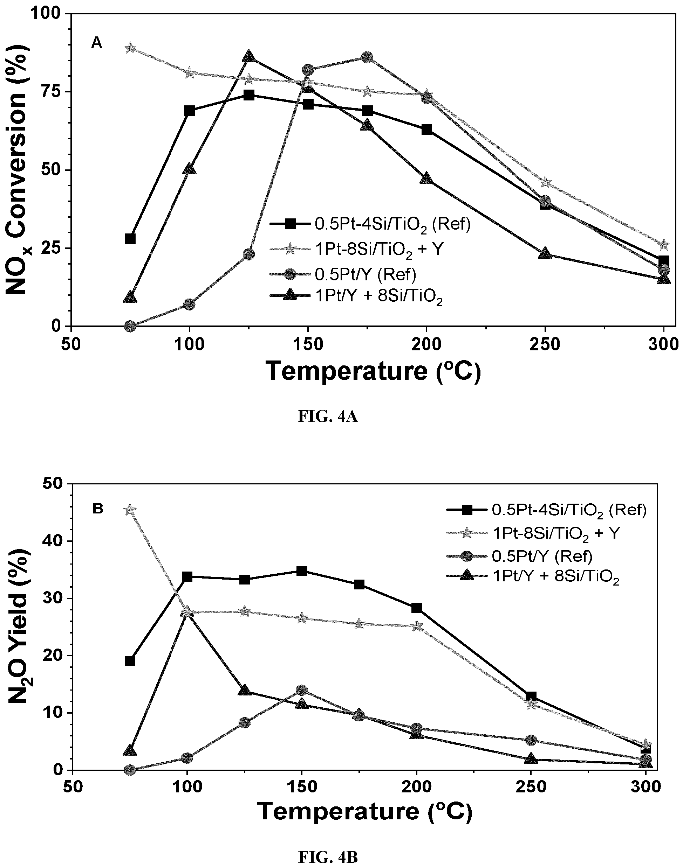

As shown in FIGs. 4A and 4B, which compares the NOₓ conversion and N₂O formation rates, respectively, of the samples listed in Table 4, the lower concentration of Pt and SiO₂ affected the NOx conversion and N₂Oformation rates. For example, Reference Sample 13 showed the lowest NOₓ conversion at low temperatures, while Sample 5 showed the highest NOₓ conversion.

### Example 5: Catalyst Preparation and Evaluation of 1Pt-8SiO₂/TiO₂ + 1CuCHA

Table 5 lists Reference Sample 1, two-component Sample 4 in which the zeolite is H-chabazite, and two-component Sample 14 in which the H-chabazite of Sample 4 was replaced with Cu-chabazite. Reference Sample 1 and Sample 4 were prepared as described in Example 1. Sample 14 was prepared similar to Sample 4, but the H-chabazite (Si/Al = 14.5:1) of Sample 4 was replaced with Cu-chabazite (1% CuO). All samples were hydrothermally aged at 650 °C for 50 hours with 10% steam in air.

**Table 5**

| Sample Number | Sample Name | PGM/Oxide | Zeolite | Mixing ratio |
|---|---|---|---|---|
| 1 | 1Pt-8SiO₂/TiO₂ (Ref) | 1% Pt-8% SiO₂/TiO₂ | N/A | NA |
| 4 | IPt-8SiO₂/TiO₂ + CHA | 1% Pt-8% SiO₂/TiO₂ | H-chabazite | 1:1 |
| 14 | 1Pt-8SiO₂/TiO₂ + 1CuCHA | 1% Pt-8% SiO₂/TiO₂ | Cu-chabazite (1% CuO) | 1:1 |

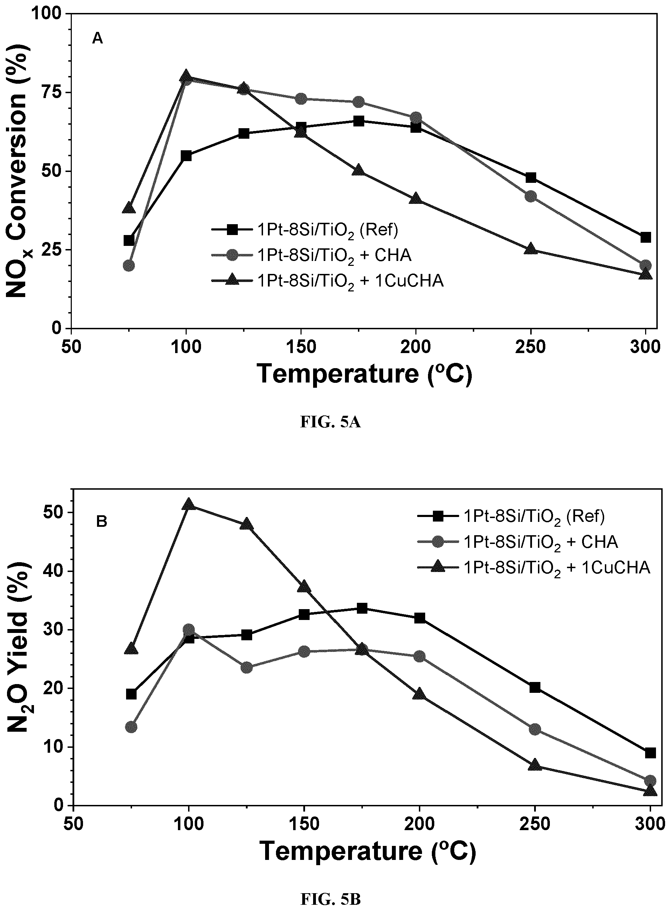

As shown in FIGs. 5A and 5 B, which compares the NOₓ conversion and N₂O formation rates, respectively, of the samples listed in Table 5, Sample 14 shows similar NOₓ conversion to Sample 4 at lower temperatures. However, at higher temperatures, Sample 14 shows lower NOₓ conversion than either Reference Sample 1 or Sample 4.

### Example 6: Catalyst Preparation and Evaluation of Pt/Pd and Pd Catalysts

Table 6 lists catalysts containing either Pt/Pd or Pd on a TiO₂ support. Reference Samples 15 and 17 were prepared by impregnating a solution mixture of colloidal Pt, Pd nitrate, and colloidal SiO₂ (acidic oxide modifier) of an appropriate component ratio (Pt/Pd weight ratio of 8/1 for Reference Sample 15 and 4/1 for Reference Sample 17, both with 8 wt.% SiO₂) on TiO₂ using the incipient wetness technique. Reference Sample 19 was prepared the same way as Reference Sample 1 in Example 1, but the colloidal Pt of Reference Sample 1 was replaced by Pd nitrate. Samples 16, 18, and 20 were prepared by mechanically mixing the respective reference catalyst of Reference Samples 15, 17, and 19 with an H-Y zeolite component at 1:1 weight ratio. The PGM concentration on the support is 1% by weight after calcination for all samples. All samples, including the reference samples, were hydrothermally aged at 650 °C for 50 hours with 10% steam in air.

**Table 6**

| Sample Number | Sample Name | PGM/Oxide | Zeolite | Mixing ratio |
|---|---|---|---|---|
| 15 | Pt₈Pd₁-8SiO₂/TiO₂ (Ref) | 1% PGM (Pt/Pd=8:1)-8% SiO₂ /TiO₂ | N/A | NA |
| 16 | Pt₈Pd₁-8SiO₂/TiO₂ + Y | 1% PGM (Pt/Pd=8:1)-8% SiO₂ /TiO₂ | H-Y | 1:1 |
| 17 | Pt₄Pd₁-8SiO₂/TiO₂ (Ref) | 1% PGM (Pt/Pd=4:1)-8% SiO₂ /TiO₂ | N/A | NA |
| 18 | Pt₄Pd₁-8SiO₂/TiO₂ + Y | 1% PGM (Pt/Pd=4:1)-8% SiO₂ /TiO₂ | H-Y | 1:1 |
| 19 | 1Pd-8SiO₂/TiO₂ (Ref) | 1% Pd-8% SiO₂/TiO₂ | N/A | NA |
| 20 | 1Pd-8SiO₂/TiO₂ + Y | 1% Pd-8% SiO₂/TiO₂ | H-Y | 1:1 |

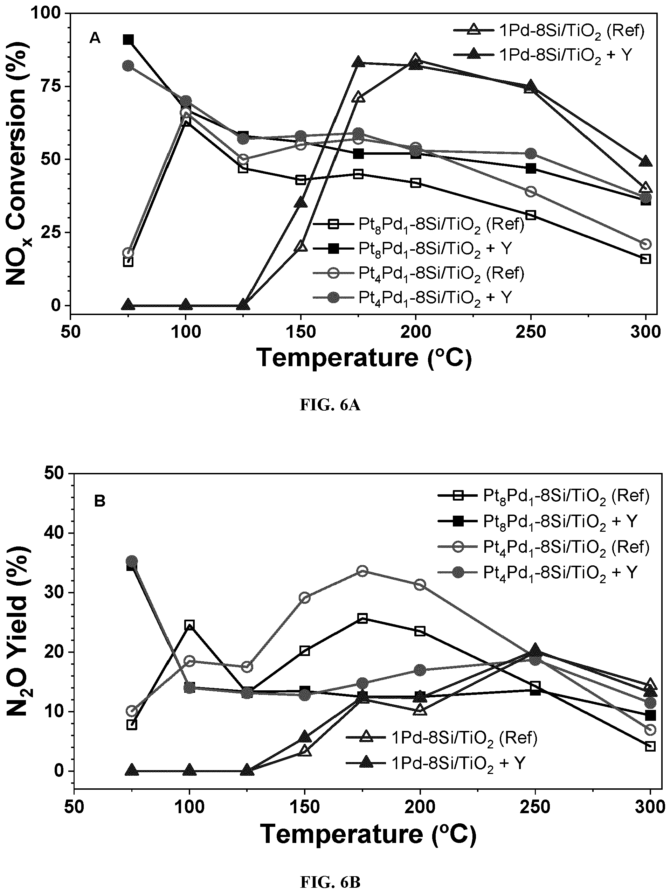

As shown in FIGs. 6A and 6 B, which compares the NOₓ conversion and N₂O formation rates, respectively, of the samples listed in Table 6, Sample 20 (Pd catalyst with H-Y-zeolite addition) has some advantage in NOₓ conversion relative to Reference Sample 19 with comparable N₂O formation. Samples 16 and 18 (PtPd catalysts) demonstrate that the addition of H-Y-zeolite increases NOₓ conversion and significantly decreases N₂O formation relative to Reference Samples 15 and 17.

### Example 7: Catalyst Preparation and Evaluation of 1Pt-8 SiO₂/TiO₂ + xFeY

Table 7 lists Reference Sample 1 and catalysts in which the zeolite Y of Sample 5 is replaced with xFeY (Si/Al = 15:1). Reference Sample 1 was prepared as described in Example 1. Samples 21 to 24 were prepared with the same method as Sample 5 as in Example 1, except zeolite H-Y being replaced by xFeY (Si/Al=15:1) with various Fe₂O₃ loadings (x = 0.25%, 0.5%, 1% and 3% by weight, respectively, with respect to the weight of zeolite). All samples were hydrothermally aged at 650 °C for 50 hours with 10% steam in air.

**Table 7**

| Sample Number | Sample Name | PGM/Oxide | Zeolite | Mixing ratio |
|---|---|---|---|---|
| 1 | IPt-8 SiO₂/TiO₂ (Ref) | 1% Pt-8% SiO₂/TiO₂ | N/A | NA |
| 21 | IPt-8 SiO₂/TiO₂ + 0.25FeY | 1% Pt-8% SiO₂/TiO₂ | Fe-Y (0.25% Fe₂O₃) | 1:1 |
| 22 | IPt-8 SiO₂/TiO₂ + 0.5FeY | 1% Pt-8% SiO₂/TiO₂ | Fe-Y (0.5% Fe₂O₃) | 1:1 |
| 23 | IPt-8 SiO₂/TiO₂ + 1FeY | 1% Pt-8% SiO₂/TiO₂ | Fe-Y (1% Fe₂O₃) | 1:1 |
| 24 | IPt-8 SiO₂/TiO₂ + 3FeY | 1% Pt-8% SiO₂/TiO₂ | Fe-Y (3% Fe₂O₃) | 1:1 |

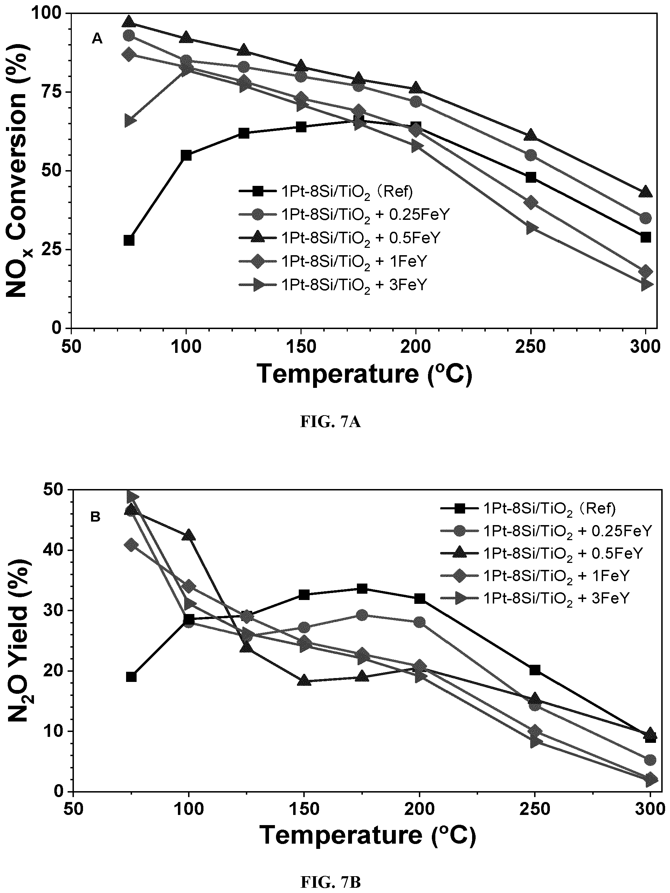

As shown in FIGs. 7A and 7B, which compares the NOₓ conversion and N₂O formation rates, respectively, of the samples listed in Table 7, addition of FeY increases the NOₓ conversion and decreases N₂O formation relative to Reference Sample 1. The best performance was observed with Sample 22.

### Example 8: Catalyst Preparation and Evaluation of 1Pt/Al₂O₃ + zeolite

Table 8 lists a series of catalysts based on 1Pt/Al₂O₃. 1Pt/Al₂O₃ was prepared by impregnating the colloidal Pt nanoparticle solution on Al₂O₃ support. After impregnation, the resulting material was calcined in air at 550 °C for 2 hours. The Pt concentration on the support is 1% by weight with respect to the weight of the support after calcination.

Sample 26 to 31 were prepared by mechanically mixing Sample 25 with a zeolite component at 1:1 weight ratio. The zeolite in Samples 26 to 31 is a H-form of beta (Si/Al=12.5:1), ferrierite (Si/Al=10:1), chabazite (Si/Al=14.5:1), Y (Si/Al=15:1), ZSM-5 (Si/Al=15:1) and mordenite (Si/Al=10:1), respectively. All samples, including the reference sample, were hydrothermally aged at 650 °C for 50 hours with 10% steam in air.

**Table 8**

| Sample Number | Sample Name | PGM/Oxide | Zeolite | Mixing ratio |
|---|---|---|---|---|
| 25 | 1Pt/Al₂O₃ (Ref) | 1% Pt /Al₂O₃ | N/A | NA |
| 26 | 1Pt/Al₂O₃ + BEA | 1%Pt/Al₂O₃ | H-beta | 1:1 |
| 27 | 1Pt/Al₂O₃ + FER | 1%Pt /Al₂O₃ | H-ferrierite | 1:1 |
| 28 | 1Pt/Al₂O₃ + CHA | 1% Pt /Al₂O₃ | H-chabazite | 1:1 |
| 29 | 1Pt/Al₂O₃ + Y | 1% Pt /Al₂O₃ | H-Y | 1:1 |
| 30 | 1Pt/Al₂O₃ + ZSM5 | 1% Pt /Al₂O₃ | H-ZSM-5 | 1:1 |
| 31 | 1Pt/Al₂O₃ + MOR | 1% Pt /TiO₂ | H-mordenite | 1:1 |

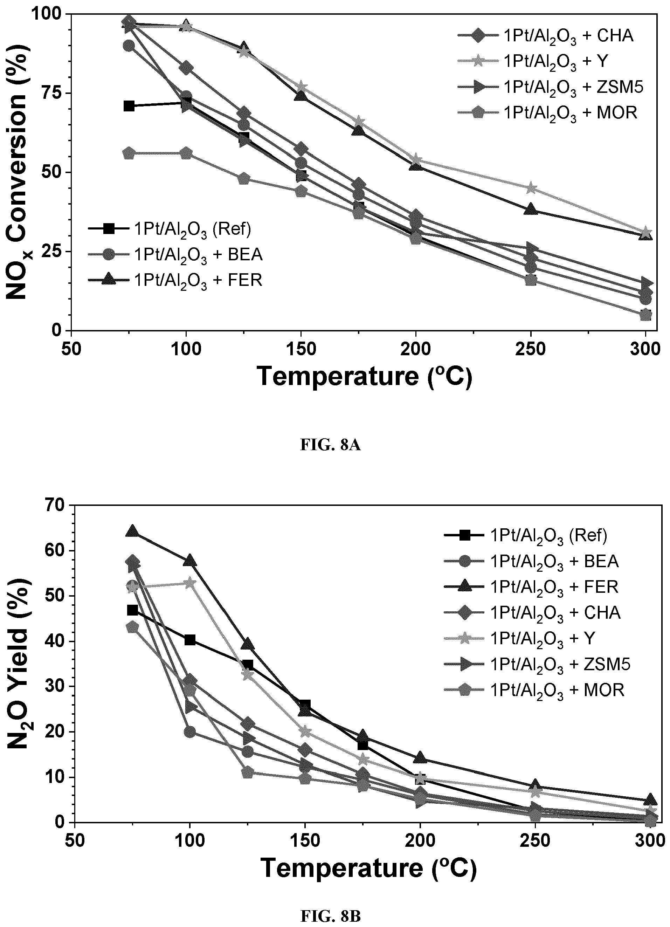

As shown in FIGs. 8A and 8B, which compares the NOₓ conversion and N₂O formation rates, respectively, of the samples listed in Table 8, all zeolite-containing catalysts (Samples 26-31) show higher NOₓ conversion across the temperature range than the reference sample (Sample 25). Samples 27 and 29 show the highest NOₓ conversion. Samples 26, 30 and 31 show the lowest N₂O formation.

### Example 9: Catalyst Preparation and Evaluation of WO₃/ZrO₂ as Pt support

Table 9 lists catalysts made using WO₃/ZrO₂ as the support. Sample 32 is a reference sample. The 5%WO₃/ZrO₂ mixed oxide support was prepared by impregnating (NH₄)₆W₁₂O₃₉ solution on Zr(OH)₄ followed by a calcination at 550 °C for 2 hours in air, which resulting in 5%WO₃/ZrO2. A mixed solution of colloidal Pt nanoparticles and colloidal SiO₂ nanoparticles (acidic oxide modifier) was then added to the WO₃/ZrO₂ mixed oxide support using the incipient wetness technique. The resulting material was calcined in air at 550 °C for 2 hours. After calcination the sample contains Pt at 1 % and 8% SiO₂ by weight with respect to the weight of the support. It was further aged at 650 °C for 50 hours in 10% steam/air.

Samples 33 to 35 were prepared by mechanically mixing the aged 1Pt-8Si/5WO₃/ZrO₂ powder with a fresh H-beta (Si/Al=12.5:1) powder at an oxide to zeolite ratio of 2:1, 1:1 and 1:2, respectively. All samples in Table 9 contain the same amount of Pt.

**Table 9**

| Sample Number | Sample Name | PGM/Oxide | Zeolite | Mixing ratio |
|---|---|---|---|---|
| 32 | 1Pt-8SiO₂/5WO₃/ZrO₂ (Aged) (Ref) | 1% Pt-8% SiO₂/ 5WO₃/ZrO₂ | N/A | NA |
| 33 | 1Pt-8SiO₂/5WO₃/ZrO₂ (Aged)+ BEA (Fresh)_2:1 | 1% Pt-8% SiO₂/ 5WO₃/ZrO₂ | H-beta | 2:1 |
| 34 | 1Pt-8SiO₂/5WO₃/ZrO₂ (Aged) + BEA (Fresh) 2:1 | 1% Pt-8% SiO₂/ 5WO₃/ZrO₂ | H-beta | 1:1 |
| 35 | 1Pt-8SiO₂/5WO₃/ZrO₂ (Aged) + BEA (Fresh) 2:1 | 1% Pt-8% SiO₂/ 5WO₃/ZrO₂ | H-beta | 1:2 |

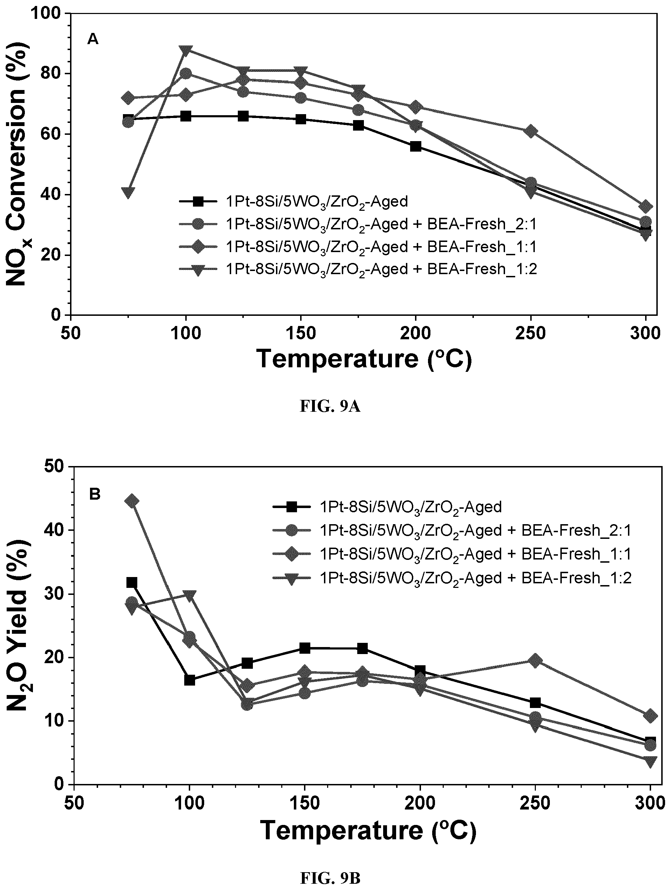

As shown in FIGs. 9A and 9B, which compares the NOₓ conversion and N₂O formation rates, respectively, of the samples listed in Table 9, all zeolite-containing samples (Samples 33-35) show higher NOₓ conversion relative to the Pt/oxide reference regardless mixing ratio. The N₂O formation on these zeolite-containing catalysts is mixed, depending on the temperature range and oxide/zeolite mixing ratio.

### Example 10: Catalyst Preparation and Evaluation of 1Pt/SiO₂ + Y

Table 10 lists catalysts with a SiO₂ support. Reference Sample 36 was prepared by impregnating colloidal Pt nanoparticle solution on a SiO₂ support. After impregnation, the resulting material was calcined in air at 550 °C for 2 hours. The Pt concentration on the support is 1% by weight after calcination. Sample 37 was prepared by mechanically mixing Reference Sample 36 with zeolite H-Y at 1:1 weight ratio. Both samples were hydrothermally aged at 650 °C for 50 hours with 10% steam in air.

**Table 10**

| Sample Number | Sample Name | PGM/Oxide | Zeolite | Mixing ratio |
|---|---|---|---|---|
| 36 | 1Pt/SiO₂ (Ref) | 1Pt/SiO₂ | N/A | NA |
| 37 | 1Pt/SiO₂ + Y | 1Pt/SiO₂ | H-Y | 1:1 |

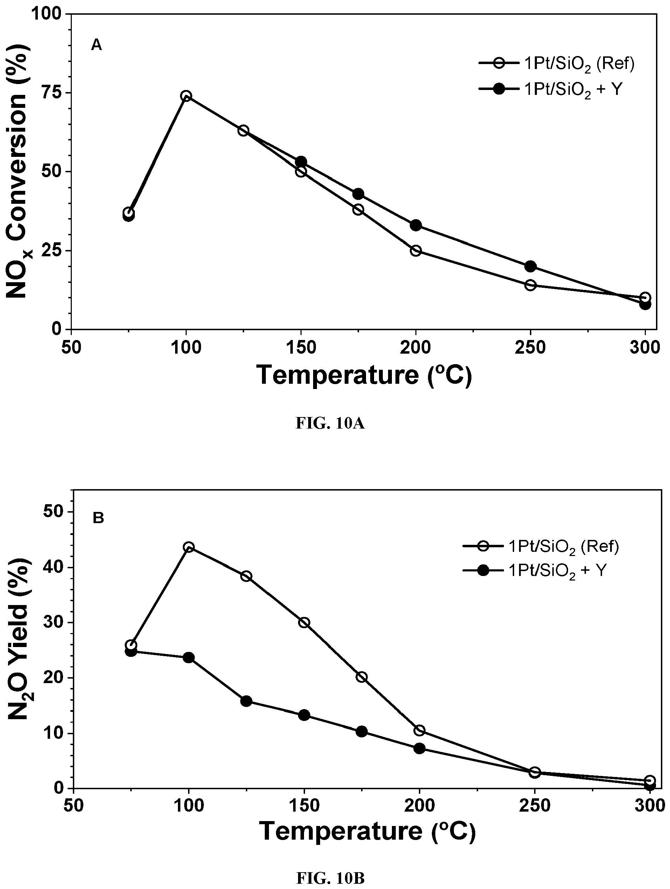

As shown in FIGs. 10A and 10B, which compares the NOₓ conversion and N₂O formation rates, respectively, of the samples listed in Table 10, Sample 37 shows similar NOₓ conversion to Reference Sample 36. However, the N₂O formation on Sample 37 is lower.

## Claims

1. A hydrogen selective catalytic reduction (H₂-SCR) catalyst composition effective for the reduction of nitrogen oxides (NOₓ) from an engine exhaust gas in the presence of a hydrogen gas reductant, the H₂-SCR catalyst composition comprising:
(i) a first component comprising a metal component of a platinum group metal (PGM) supported by an oxide support; and
(ii) a second component comprising a zeolite.

2. The H₂-SCR catalyst composition according to claim 1, wherein the first component further comprises a second PGM component supported on the oxide support.

3. The H₂-SCR catalyst composition according to claim 1, further comprising a third component comprising a second PGM supported on a second oxide support.

4. The H₂-SCR catalyst composition according to claim 1, wherein the metal component is present in an amount if about 0.1% to about 10% by weight with respect to the weight of oxide support.

5. The H₂-SCR catalyst composition according to claim 1, wherein the oxide support is a mixed oxide support.

6. The H₂-SCR catalyst composition according to claim 5, wherein the mixed oxide is selected from TiO₂/ZrO₂, WO₃/Al₂O₃, WO₃/TiO₂,WO₃/SiO₂, WO₃/ZrO₂ SiO₂/TiO₂, and SiO₂/Al₂O₃.

7. The H₂-SCR catalyst composition according to claim 1, further comprising an acidic oxide modifier on the oxide support

8. The H₂-SCR catalyst composition according to claim 1, wherein the zeolite is an acidic zeolite.

9. The H₂-SCR catalyst compositions according to claim 1, wherein the zeolite is a metal promoted zeolite.

10. The H₂-SCR catalyst composition according to claim 1, wherein the zeolite comprises more than one structure type.

11. The H₂-SCR catalyst composition according to claim 1, wherein the first component and second component are added in a mass ratio ranging from 95:5 to 10:90.

12. The H₂-SCR catalyst composition according to claim 1, wherein the first component and second component are combined into a composite by: (1) physical mixing the first and second components; (2) dispersing the first and second components in water to form a slurry; (3) co-milling the first and second components; or (4) a combination thereof.

13. A selective catalytic reduction (SCR) article effective to catalyze the reduction of nitrogen oxides (NOₓ) from an exhaust gas in the presence of a hydrogen gas reductant, the SCR article comprising a substrate having H₂-SCR catalyst composition according to claim 1 disposed thereon.

14. An emissions treatment system for selectively reducing NOₓ compounds from an exhaust gas stream, the system comprising the SCR article according to claim 13.

15. A method for treating an exhaust stream containing NOₓ compounds, the method comprising passing the exhaust gas stream through the emissions treatment system of claim 14.
